# EUROPEAN PATENT APPLICATION

(11) **EP 2 263 898 A2**
(43) Date of publication of application: **22.12.2010**
(21) Application number: 10005923.7
(22) Date of filing: 09.06.2010
(51) Int. Cl.: B60J 10/00, B60J 10/02

(54) **Appliqué with integrated end cap and window molding**

(30) Priority: 16.06.2009 US 456362
(71) Applicant: Magna International Inc., Aurora, ON L4G 7K1 (CA)
(72) Inventor: Ellis, Peter, J., Rochester Hills MI 48309 (US); Kawase, Haruhisa, Rochester Hills MI 48306 (US); Hancock, William, Huntington Woods MI 48070 (US)
(74) Representative: Hössle Patentanwälte Partnerschaft

(57) **Abstract**

An assembly (10) for a door (12) of a motor vehicle includes a window molding (14) having an end portion including an edge. The window molding includes opposing inboard (54) and outboard (56) legs defining a channel (60) therebetween. The assembly also includes an appliqué (24) extending between an upper and a lower end. The appliqué includes an end cap (50) integrally formed at the lower end. The end cap abuts the edge of the end portion to close out the window molding.

## Description

### BACKGROUND

### 1. Field of the Invention

The invention relates to appliqués for motor vehicles. More particularly, the invention relates to an appliqué having an integrated end cap for closing out an edge of a window molding.

### 2. Description of Related Art

Motor vehicles typically include an elongated window molding which is positioned to provide a seal between a window glass and a motor vehicle door. The window molding is fixedly secured to the motor vehicle door and sealingly engages the window glass to prevent moisture and other environmental elements from entering the space between the window glass and the motor vehicle door.

### SUMMARY

According to one aspect of the invention, an assembly for a door of a motor vehicle includes a window molding having an end portion including opposing inboard and outboard legs defining a channel therebetween. The assembly also includes an appliqué extending between an upper and a lower end. The appliqué includes an attachment fin integrally formed therewith at the lower end. The attachment fin is received within the channel of the window molding to fixedly secure the window molding to the appliqué.

According to another aspect of the invention, an assembly for a door of a motor vehicle includes a window molding having an end portion including an edge. The assembly also includes an appliqué fixedly secured to the window molding and extending between opposing upper and lower ends. The appliqué includes an end cap integrally formed at the lower end and abutting the edge of the end portion to close out the window molding.

According to yet another aspect of the invention, an appliqué is adapted to be attached to a motor vehicle door including a window molding mounted thereto and having an end portion disposed along the door. The appliqué extends between opposing upper and lower ends and has an exterior facing surface. The appliqué includes an end cap integrally formed at the lower end and is adapted to abut an edge of the end portion of the window molding to close out the window molding.

### BRIEF DESCRIPTION OF THE DRAWINGS

The invention will be readily appreciated as the same becomes better understood by reference to the following detailed description when considered in connection with the accompanying drawings wherein:

Figure 1 is a perspective view of an assembly including a window molding mounted to an appliqué and a door of a motor vehicle;

Figure 2 is a fragmentary perspective view of the appliqué including an attachment fin and an end cap integrally formed therewith;

Figure 3 is a fragmentary perspective view of the appliqué including a glass run retaining channel;

Figure 4 is a fragmentary perspective view of an end portion of the window molding mounted to the appliqué;

Figure 5 is a fragmentary perspective view of the assembly including a trim cover mounted along the window molding;

Figure 6 is a cross-sectional view taken along lines 6-6 in Figure 5;

Figure 7 is a cross-sectional view taken along lines 7-7 in Figure 5;

Figure 8 is a fragmentary perspective view of the appliqué in an assembly according to another embodiment including an attachment fin and a generally rectangular-shaped end cap integrally formed therewith;

Figure 9 is a fragmentary perspective view of the appliqué including a glass run retaining channel;

Figure 10 is a fragmentary perspective view of an end portion of the window molding mounted to the appliqué;

Figure 11 is a fragmentary perspective view of the assembly including a trim cover, including an end wall, mounted along the window molding;

Figure 12 is a cross-sectional view of an assembly according to yet another embodiment including a window molding mounted to an attachment fin of an appliqué;

Figure 13 is a fragmentary perspective view of the assembly including the window molding mounted along the appliqué;

Figure 14 is a cross-sectional view of an assembly according to still another embodiment including a window molding disposed along an appliqué; and

Figure 15 is a fragmentary perspective view of the appliqué including an end cap integrally formed therewith.

### DETAILED DESCRIPTION OF THE EMBODIMENTS

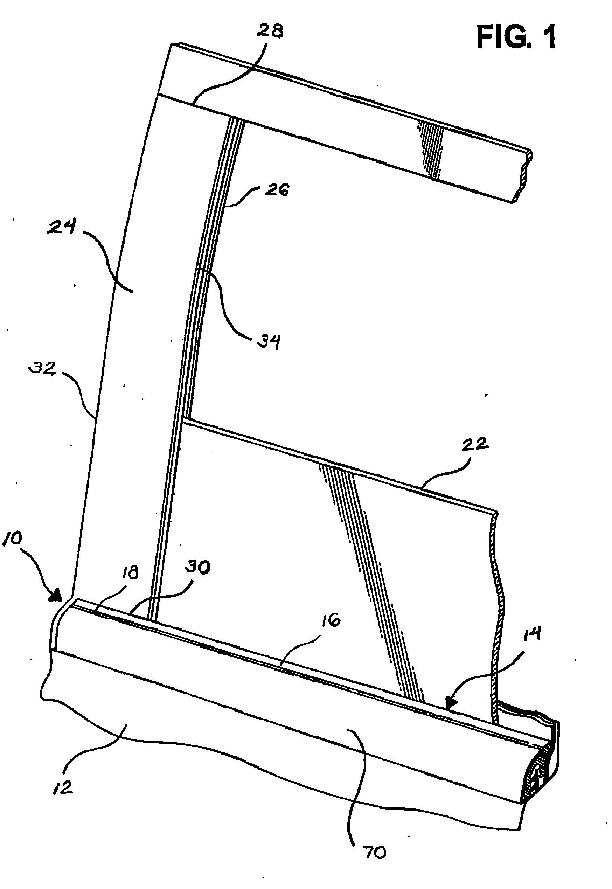

Referring to Figure 1, an assembly, generally shown at 10, is mounted to a door 12 of a motor vehicle. The assembly 10 includes a window molding, generally indicated at 14. In one embodiment, the window molding 14 is a belt-line molding mounted longitudinally along a belt-line of the door 12. The window molding 14 includes a door mounting portion 16 and an end portion 18. The door mounting portion 16 is mounted to the door 12 at the location at which an inner door panel and outer door panel are joined. The door mounting portion 16 includes at least one sealing member for sealingly engaging a window glass 22.

Referring to Figures 1 through 3, an appliqué 24 provides an aesthetically pleasing appearance along the door 12, In one embodiment, the appliqué 24 is a B-pillar appliqué that covers a door pillar 26. It is, however, appreciated that the appliqué 24 may be an A-pillar appliqué, a C-pillar appliqué, a D-pillar appliqué, an upper reveal, or a sash molding. The appliqué 24 extends longitudinally between an upper end 28 and a lower end 30, and laterally between a first edge 32 and a second edge 34. The appliqué 24 includes a return flange 35 extending out from the first edge 32 perpendicular to an exterior facing surface 44. The return flange 35 hides an upper edge of the door 12. The appliqué 24 defines a glass run retaining channel 36 disposed along the second edge 34 and extending between the upper 28 and lower 30 ends. A glass run insert 38 is received within the glass run retaining channel 36 for sealingly engaging the window glass 22. It is contemplated that the appliqué 24 may be formed from any of numerous materials by any of numerous methods.

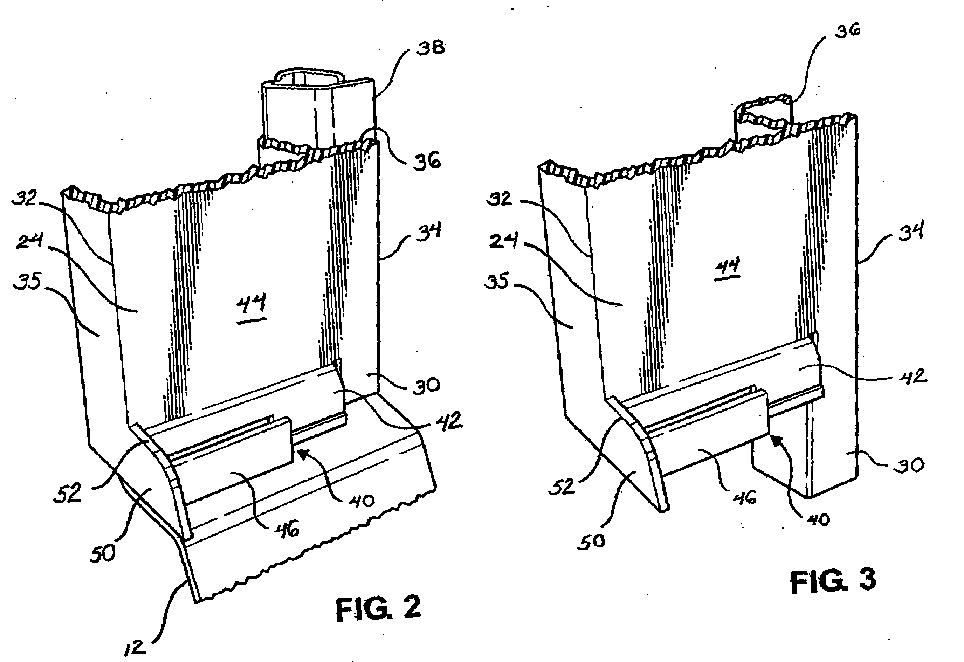

Referring to Figures 2 and 3, a mounting structure, generally shown at 40, is integrally formed at the lower end 30 of the appliqué 24. The mounting structure 40 includes a projection 42 extending away from the exterior facing surface 44 of the appliqué 24. The mounting structure 40 also includes an attachment fin 46 secured to the projection 42 by a connecting segment 48. The attachment fin 46 is, therefore, spaced apart from the exterior facing surface 44 of the appliqué 24. The attachment fin 46 extends out from the first edge 32 of the appliqué 24 and terminates at a location generally midway between the first 32 and second 34 edges of the appliqué 24. It is, however, appreciated that the particular length of the attachment fin 46 may vary.

The appliqué 24 also includes an end cap 50 integrally formed at the first edge 32 at the lower end 30. The end cap 50 closes out an interior of the end portion 18 of the window molding 14. The end cap 50 in one embodiment includes a closeout wall 52 that extends out away from the exterior facing surface 44 of the appliqué 24. In one embodiment, the end cap 50 is shaped to complement the cross-section of the end portion 18 of the window molding 14.

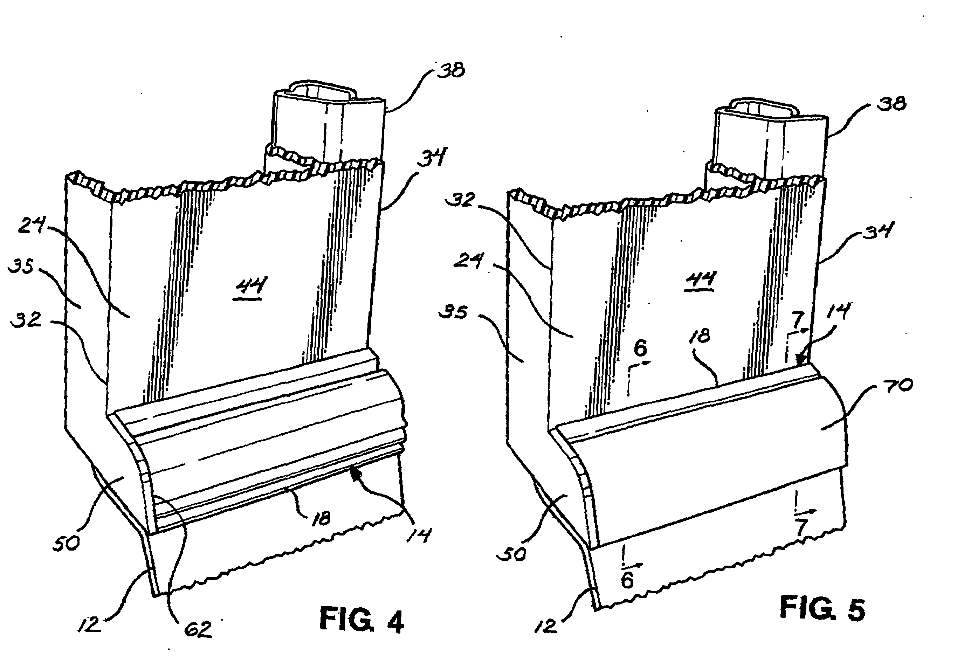

Referring to Figures 4 through 7, the end portion 18 of the window molding 14 is mounted along the attachment fin 46 of the appliqué 24 to fixedly secure the window molding 14 thereto. The end portion 18 of the window molding 14 includes an inboard leg 54, an outboard leg 56, and a main body portion 58 connecting the inboard leg 54 to the outboard leg 56. The inboard 54 and outboard 56 legs define a channel 60 therebetween. The attachment fin 46 is received within the channel 60 when the end portion 18 is mounted to the appliqué 24. The outboard leg 56 includes at least one retention finger 62 extending into the channel 60 and engaging the attachment fin 46 to retain the end portion 18 therealong.

When the end portion 18 of the window molding 14 is mounted to the appliqué 24 as described above, the end cap 50 abuts an edge 62 of the end portion 18. Because the end cap 50 is in one embodiment shaped to complement the cross-section of the end portion 18 of the window molding 14, the closeout wall 52 of the end cap 50 closes off the interior of the end portion 18 of the window molding 14 to provide a finished appearance.

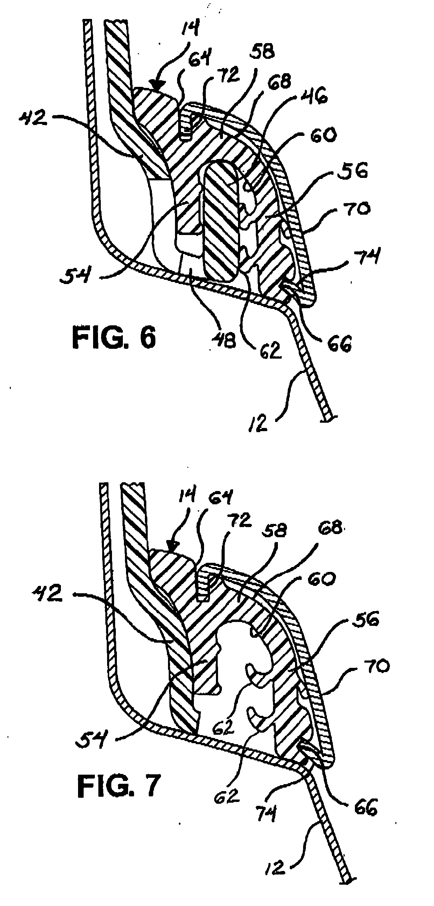

Referring to Figures 6 and 7, the window molding 14 also includes first 64 and second 66 openings formed along an outboard surface 68. A trim cover 70 is positioned to cover the outboard surface 68 of the window molding 14 for aesthetic and protective purposes. The trim cover 70 includes an upper lip 72 and a lower lip 74. The upper lip 72 is constructed and arranged to be received within the fust opening 64. The lower lip 74 is constructed and arranged to be received within the second opening 66. The trim cover 70 may be formed from one of many different types of materials, such as steel, aluminum, or the like. In addition, the trim cover 70 may be anodized or chrome-plated. Further, the trim cover 70 may be painted or otherwise colored based upon the color of the vehicle body or other factors.

When the trim cover 70 is mounted along the window molding 14, the end cap 50 is flush with the trim cover 70 to provide a finished appearance at the edge 62 of the end portion 18 of the window molding 14.

The assembly 10 may be formed as a module that is preassembled at a location away from the motor vehicle and then secured to the door 12 as a single, unitary component, that is, the end portion 18 of the window molding 14 may be mounted along the attachment fin 46 of the appliqué 24 and then the unitary appliqué-window molding 24, 14 can be mounted to the door 12. The trim cover 70 may be secured to the window molding 14 either before or after the window molding 14 is mounted to the door 12.

Alternatively, the assembly 10 may be separately mounted to the door 12 with the appliqué 24 mounted first to the door 12 followed by the window molding 14 being mounted to both the appliqué 24 and the door 12.

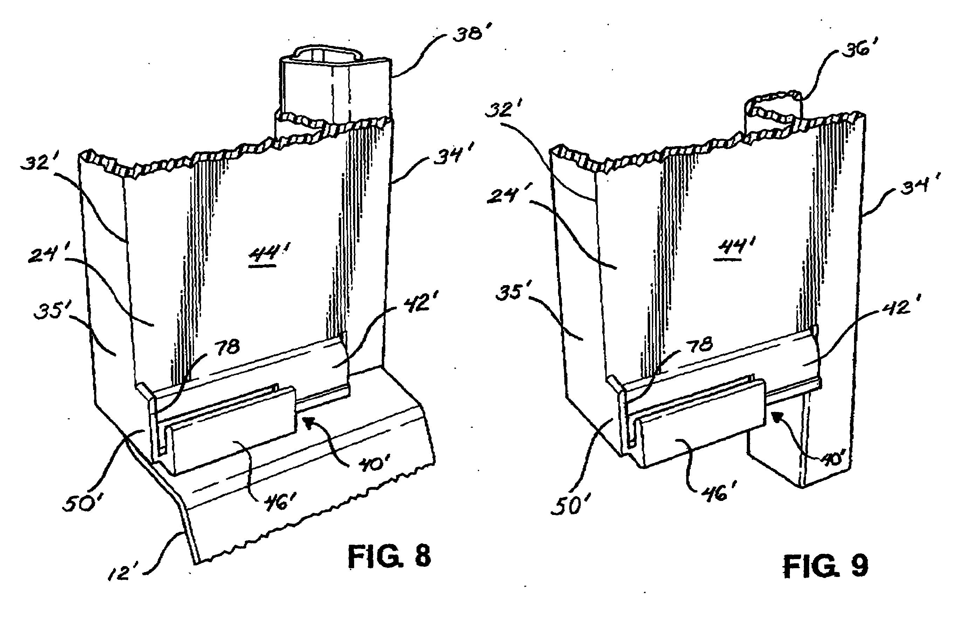

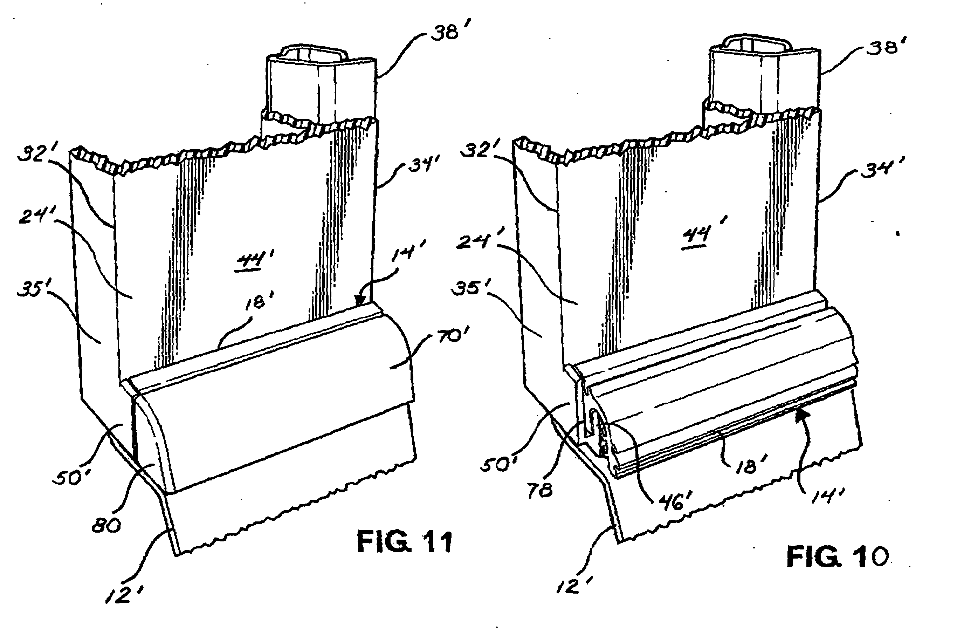

Referring to Figures 7 through 11, wherein primed reference numerals represent similar elements as those set forth above, in an assembly 10' according to another embodiment the end cap 50' is generally rectangular-shaped and includes an outer edge 78. In order to provide a finished appearance for this embodiment of the assembly 10', the trim cover 70' includes an end wall 80 that abuts the edge 62' of the end portion 18' of the window molding 14'. The end wall 80 is flush with the end cap 50' to provide a continuous closeout surface.

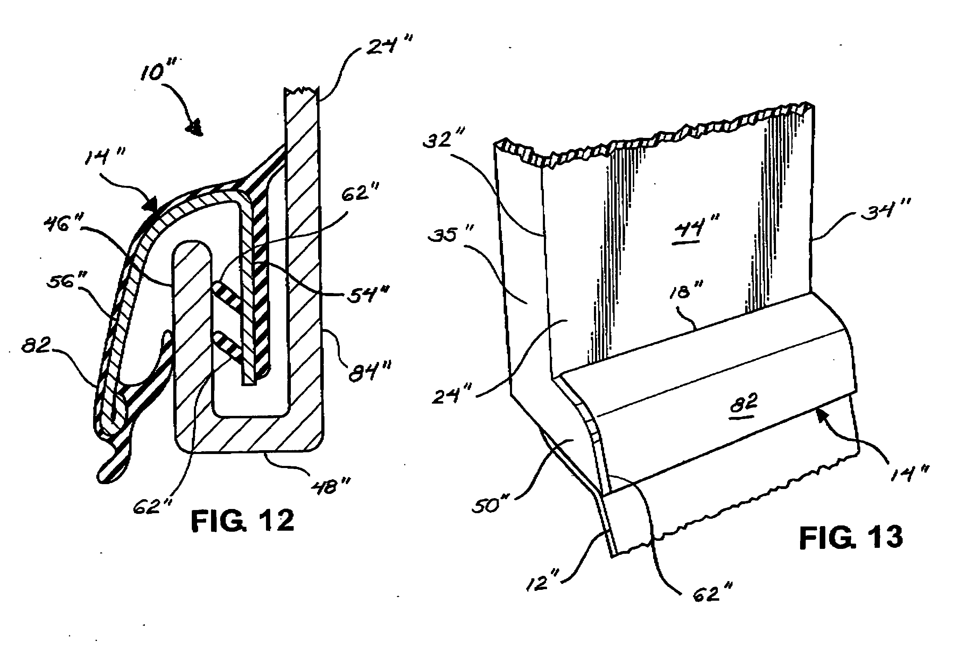

Referring to Figures 12 and 13, wherein double-primed reference numerals represent similar elements as those set forth above, in an assembly 10" according to yet another embodiment the window molding 14" mounted to the attachment fin 46" includes a finished exterior surface 82. Thus, there is no need for the trim cover 70, 70' set forth in the previous embodiments. Further, the appliqué 24" according to this embodiment includes a lower leg 84 extending straight down from the exterior facing surface 44' rather than the projection 42, 42" which was spaced apart from the exterior facing surface 44, 44'. The end cap 50" of the appliqué 24 closes off the interior of the window molding 14"' by abutting against the edge 62"' of the end portion 18".

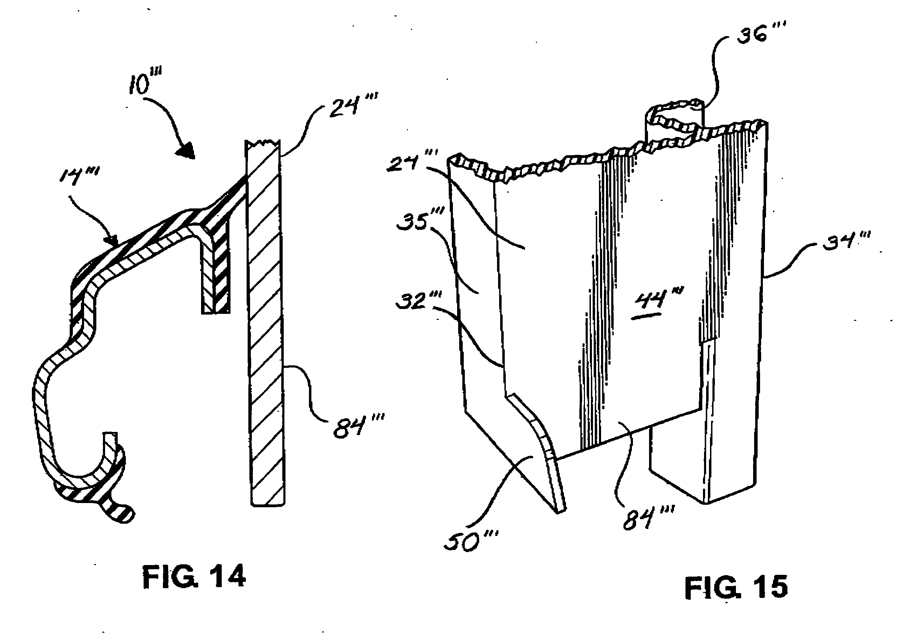

Referring to Figures 14 and 15, wherein triple-primed reference numerals represent similar elements as those set forth above, in an assembly 10"' according to still another embodiment the window molding 14"' is secured to the door 12"' by one or more clips (not shown) at a location spaced apart from the appliqué 24"', thereby obviating the need for the attachment fin 46, 46', 46". Again, the end cap 50"' of the appliqué 24 closes off the interior of the window molding 14" by abutting against the edge 62"' of the end portion 18"'.

It is further appreciated that the window molding 14, 14', 14", 14"' may be attached to the appliqué 24, 24', 24", 24"' by any of numerous methods including, but not limited to, a snap-fit attachment, a push-fit attachment, rivets, glue, and tape.

The invention has been described in an illustrative manner. It is to be understood that the terminology, which has been used, is intended to be in the nature of words of description rather than of limitation. Many modifications and variations of the invention are possible in light of the above teachings. Therefore, within the scope of the appended claims, the invention may be practiced other than as specifically described.

## Claims

1. An assembly for a door of a motor vehicle, said assembly comprising:
a window molding having an end portion including opposing inboard and outboard legs defining a channel therebetween; and
an appliqué extending between an upper end and a lower end, said appliqué including an attachment fin integrally formed therewith at said lower end, said attachment fin received within said channel of said window molding to fixedly secure said window molding to said appliqué.

2. The assembly as set forth in claim 1 wherein said window molding includes at least one retention finger fixedly secured to one of said inboard and outboard legs and extending into said channel, said at least one retention finger engaging said attachment fin to retain said window molding therealong.

3. The assembly as set forth in claim 2 including a trim cover fixedly secured to said window molding to provide a finished appearance therealong.

4. The assembly as set forth in claim 3 wherein said appliqué includes an end cap abutting an edge of said end portion of said window molding to close out said end portion.

5. An assembly for a door of a motor vehicle, said assembly comprising:
a window molding having an end portion including an edge; and
an appliqué fixedly secured to said window molding and extending between opposing upper and lower ends, said appliqué including an end cap integrally formed at said lower end and abutting said edge of said end portion to close out said window molding.

6. The assembly as set forth in claim 5 wherein said appliqué includes an attachment fin integrally formed therewith at said lower end to fixedly secure said window molding to said appliqué.

7. The assembly as set forth in claim 5 including a trim cover fixedly secured to said window molding.

8. The assembly as set forth in claim 7 wherein said trim cover includes an end wall abutting against said end cap of said appliqué.

9. The assembly as set forth in claim 5 wherein said end cap is generally rectangular-shaped,

10. The assembly as set forth in claim 5 wherein said end cap is shaped to complement said end portion of said window molding.

11. An appliqué adapted to be attached to a motor vehicle door including a window molding having an end portion disposed along the door, said appliqué extending between opposing upper and lower ends and having an exterior facing surface, said appliqué including an end cap integrally formed at said lower end and adapted to abut an edge of the end portion of the window molding to close out said window molding.

12. The appliqué as set forth in claim 11 including an attachment fin integrally formed at said lower end, said attachment fin adapted to be fixedly secured to said end portion of said window molding.

13. The appliqué as set forth in claim 12 including a projection for spacing said attachment fin apart from said exterior facing surface.

14. The appliqué as set forth in claim 11 wherein said end cap is generally rectangular-shaped.

15. The appliqué as set forth in claim 11 wherein said end cap is shaped to complement said end portion of said window molding.
